# EUROPEAN PATENT SPECIFICATION

(11) **EP 3 763 959 B1**
(45) Date of publication and mention of the grant of the patent: **28.06.2023**
(21) Application number: 19764502.1
(22) Date of filing: 28.01.2019
(51) Int. Cl.: F16D 1/02, F16D 3/20

(54) **POWER TRANSMITTING SHAFT**
STROMÜBERTRAGUNGSWELLE
ARBRE DE TRANSMISSION DE PUISSANCE

(30) Priority: 07.03.2018 JP 2018040321
(43) Date of publication of application: 13.01.2021
(73) Proprietor: Hitachi Astemo, Ltd., Hitachinaka-shi, Ibaraki (JP)
(72) Inventor: SUGIYAMA, Kenichi, Atsugi-shi, Kanagawa 243-8510 (JP); ISHIKURA, Kenichiro, Atsugi-shi, Kanagawa 243-8510 (JP)
(74) Representative: Grünecker Patent- und Rechtsanwälte PartG mbB
(86) International application number: PCT/JP2019/002711
(87) International publication number: WO 2019/171820

(56) References cited:
- DE-A1-102015 219 251
- DE-A1-102016 121 785
- JP-A- H0 464 484
- JP-A- 2018 003 925
- JP-A- 2018 016 087
- JP-U- H04 119 617
- US-A1- 2018 023 629

## Description

### TECHNICAL FIELD

The present invention relates to a power transmitting shaft.

### BACKGROUND ART

Patent Document 1 discloses a technique rerating to a propeller shaft, as a power transmitting shaft, whose axial direction one end side is connected to a first shaft at a driving source side and whose other end side is connected to a second shaft at a driving wheel side through respective constant-velocity joints. Further, in the Patent Document 1, the first and second shafts are connected to the respective constant-velocity joints in such a manner that circlips (snap rings) fitted onto outer peripheral sides of the respective first and second shafts are fitted into and engaged with ring-shaped stopper grooves formed by cutting at inner peripheral sides of inner or outer ring members of the respective constant-velocity joints. Patent Documents 2 and 3 each disclose power transmitting shafts according to the preamble of claim 1. Patent Document 4 discloses a hub for a shaft-hub connection for a drive train of a motor vehicle and uses a clamping means to reduce play between an inner profile with an outer profile.

### CITATION LIST

### PATENT DOCUMENT

Patent Document 1: Japanese Unexamined Patent Application Publication No. 2013-194895
Patent Document 2: US 2018/023629 A1
Patent Document 3: DE 10 2016 121785 A1
Patent Document 4: DE 10 2015 219251 A1

### SUMMARY OF THE INVENTION

### TECHNICAL PROBLEM

In a case of a structure of the technique disclosed in the Patent Document 1, however, since the snap rings are fitted into and engaged with the stopper grooves formed at the inner peripheral sides of the inner or outer ring members of the respective constant-velocity joints, it is not possible to check an engagement-stop state of each snap ring from the outside. Consequently, there is a risk of not properly assembling the propeller shaft.

Anobj ect of the present invention is therefore to provide a power transmitting shaft having a structure in which the engagement-stop state of the snap ring can be visually checked from the outside.

### SOLUTION TO PROBLEM

In the present invention, a first shaft anda second shaft as axial members each have an inserting end portion and a fitting groove portion, and a power transmitting shaft comprises : a shaft member provided between the first shaft and the second shaft; a j oint member provided between the shaft member and the axial member in a direction of a rotation axis of the axial member and having a joint portion and a tubular portion, wherein the joint portion is a flexible joint provided at the shaft member, and the tubular portion has a tubular portion body, a retaining ring inserting portion and a retaining ring fitting portion, wherein the tubular portion body is provided at the joint portion and has a tubular shape into which the inserting end portion of the axial member can be inserted, the retaining ring inserting portion is provided at the tubular portion body and penetrates the tubular portion body in a radial direction crossing the rotation axis of the axial member, and the retaining ring fitting portion is provided at the tubular portion body, opens toward an inner side of the tubular portion body in the radial direction crossing the rotation axis of the axial member and has a shape that extends in a circumferential direction of the rotation axis of the axial member; and a retaining ring made of elastic material, wherein the retaining ring can be inserted into the tubular portion body from the retaining ring inserting portion , and the retaining ring stops a movement of the joint member relative to the axial member in the direction of the rotation axis of the axial member by fitting of the retaining ring into both of the fitting groove portion of the axial member and the retaining ring fitting portion with the inserting end portion being inserted into the tubular portion.

### EFFECTS OF INVENTION

Therefore, according to the present invention, by fitting the retaining ring to an inside of the tubular portion, pulling-out of a vehicle side rotation shaft is prevented. Also, by providing the retaining ring inserting portion at the tubular portion, an engagement-stop state of the vehicle side rotation shaft by the retaining ring can be visually checked from the outside, and check of a proper prevention of the pulling-out by the retaining ring can be made.

### BRIEF DESCRIPTION OF THE DRAWINGS

Fig. 1 is a general view of a propeller shaft as an example to which the present invention is applied.
Fig. 2 is a perspective view showing a second constant-velocity joint and a snap ring according to an embodiment 1.
Fig. 3 is a partial cross section of the second constant-velocity joint according to the embodiment 1.
Fig. 4 is a sectional view taken along a plane A-A of

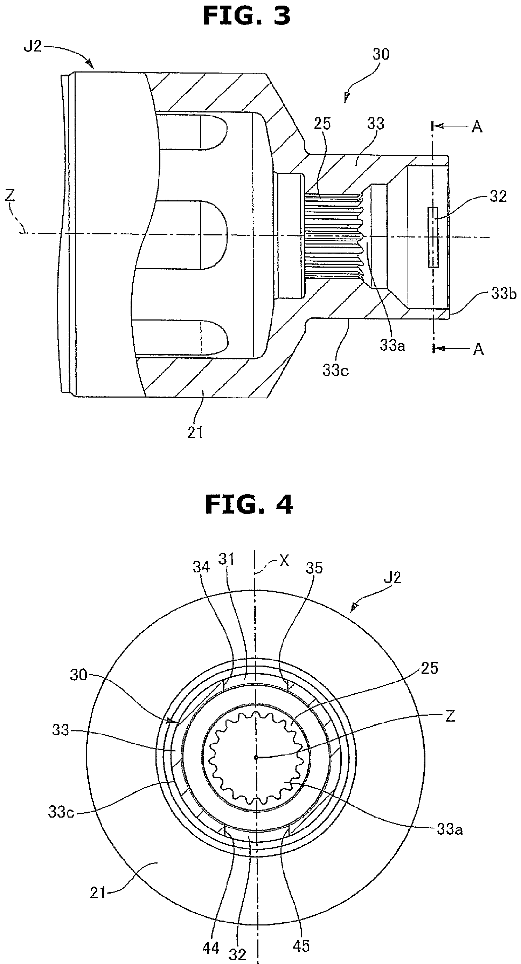

Fig. 3, according to the embodiment 1.

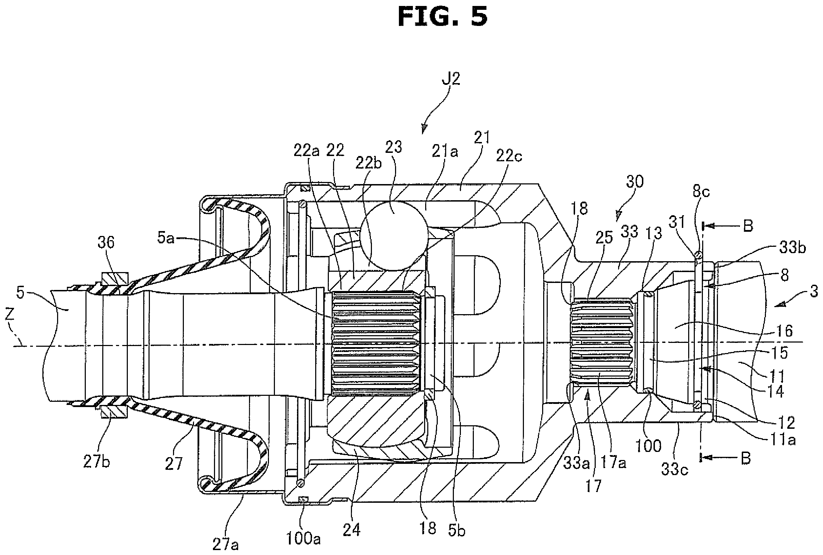

Fig. 5 is a sectional view showing a state after assembling the second constant-velocity joint and a second shaft, according to the embodiment 1.

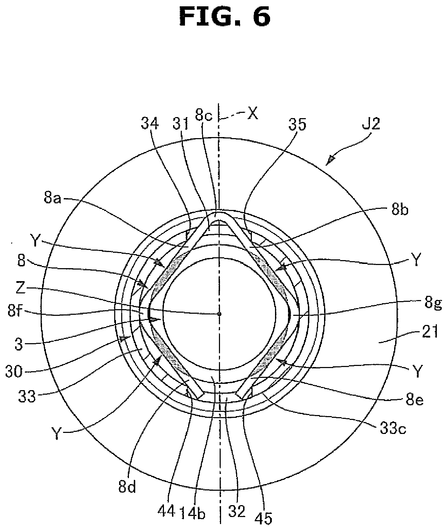

Fig. 6 is a sectional view taken along a plane B-B of
Fig. 5, according to the embodiment 1.

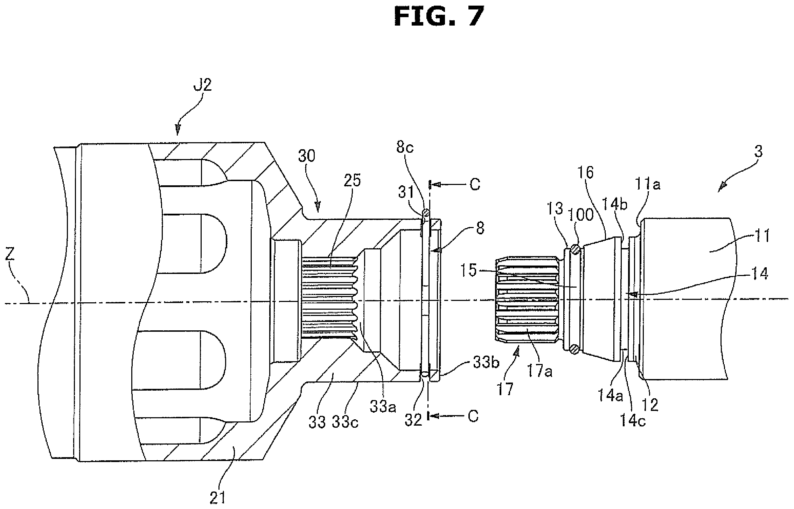

Fig. 7 is a sectional view showing a state before assembling the second constant-velocity joint and the second shaft, according to the embodiment 1.

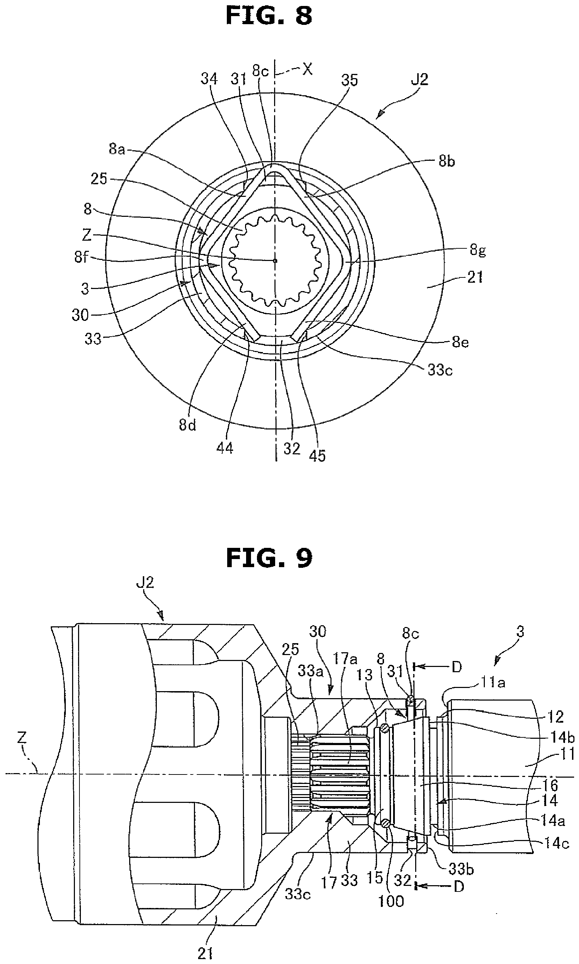

Fig. 8 is a sectional view taken along a plane C-C of
Fig. 7, according to the embodiment 1.
Fig. 9 is a sectional view showing a state during assembly of the second constant-velocity joint and the second shaft, according to the embodiment 1.

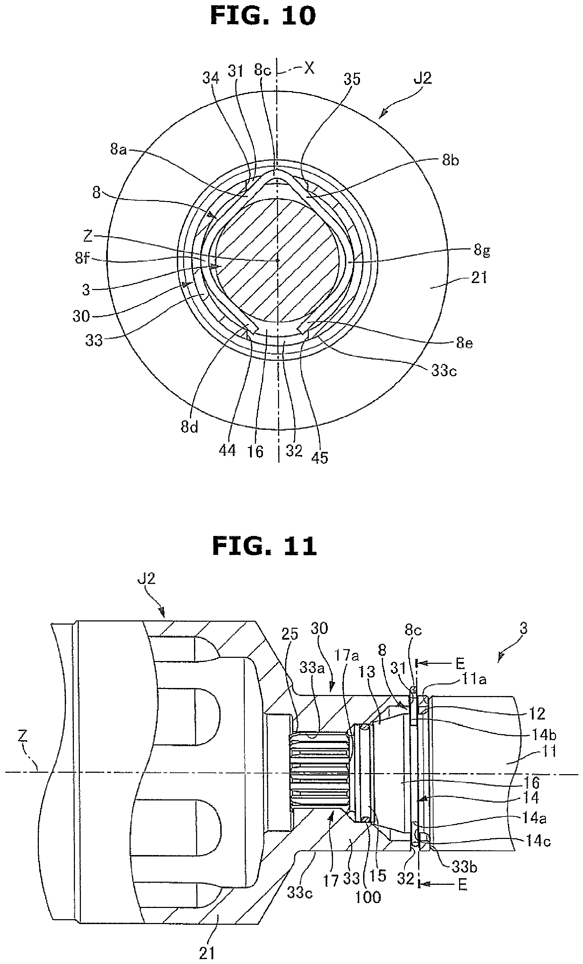

Fig. 10 is a sectional view taken along a plane D-D of
Fig. 9, according to the embodiment 1.
Fig. 11 is a sectional view showing a state of completion of the assembly of the second constant-velocity joint and the second shaft, according to the embodiment 1.

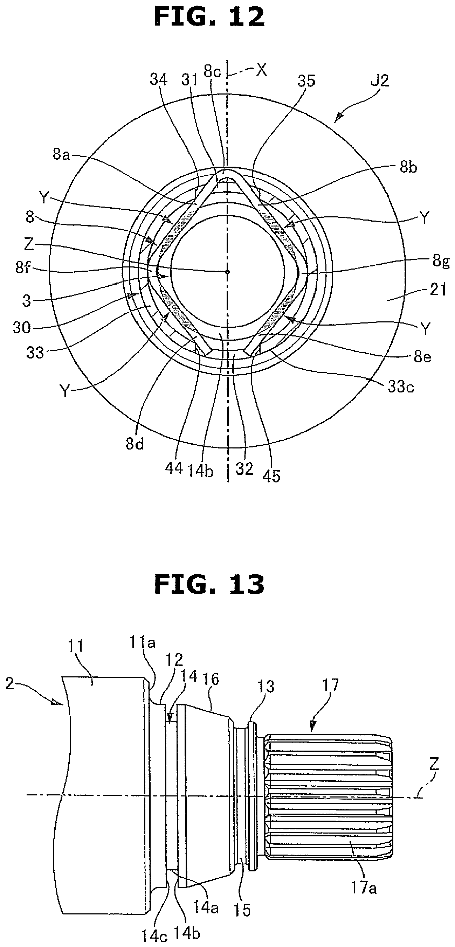

Fig. 12 is a sectional view taken along a plane E-E of
Fig. 11, according to the embodiment 1.
Fig. 13 is a drawing showing an inserting end portion and its vicinity of a first shaft according to an embodiment 2.

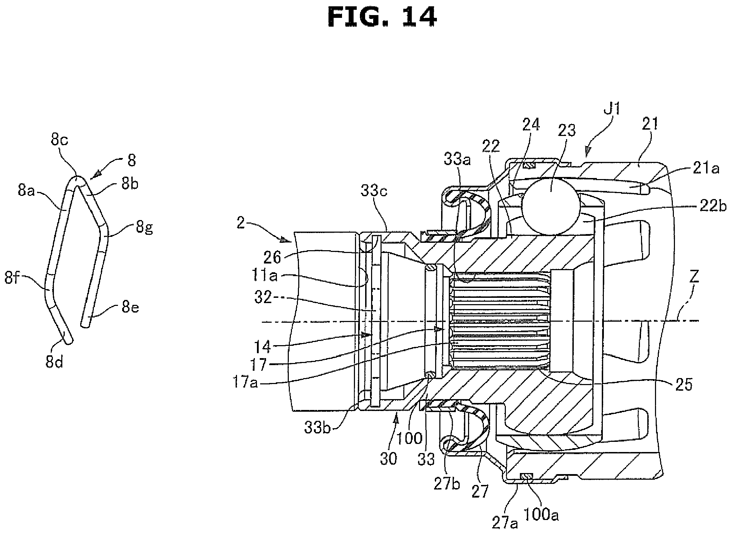

Fig. 14 is a drawing showing a state after assembling a first constant -velocity joint and the first shaft before a snap ring is inserted, according to the embodiment 2 .

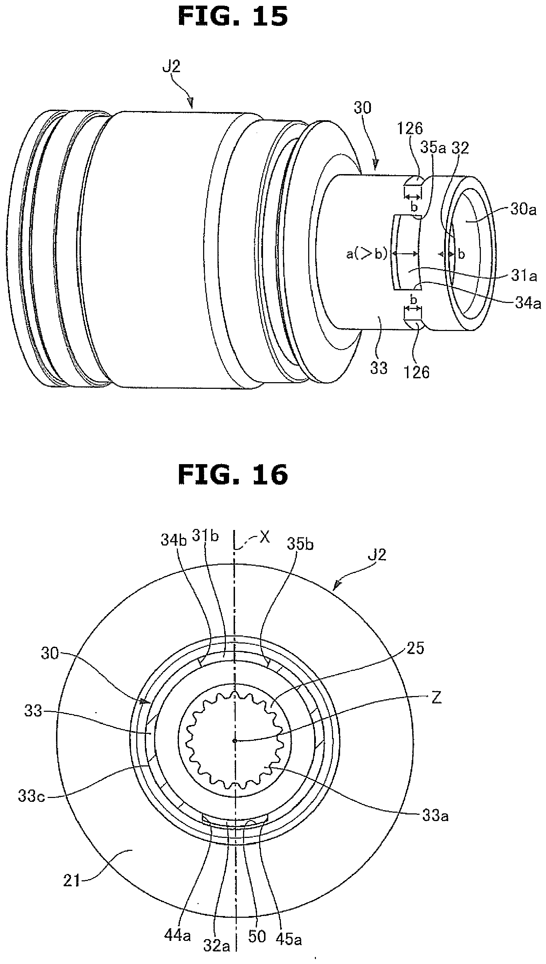

Fig. 15 is a perspective view showing a second constant-velocity joint as a joint portion and a tubular portion according to an embodiment 3.
Fig. 16 is a partial cross section of a second constant-velocity joint as a joint portion and a tubular portion according to an embodiment 4.

### EMBODIMENTS FOR CARRYING OUT THE INVENTION

### [Embodiment 1]

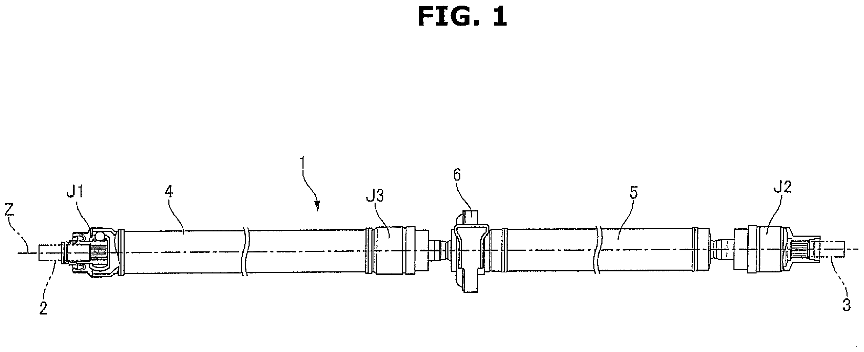

Fig. 1 is a general view of a propeller shaft as an example to which the present invention is applied.

In the following explanation, for the sake of convenience, a left side in Fig. 1 is called a vehicle front side, and a right side is called a vehicle rear side. Further, a direction along a rotation axis Z in Fig. 1 is called an axial direction, and a direction of rotation of the rotation axis Z is called a circumferential direction.

### (Configuration of propeller shaft)

A propeller shaft 1 as a power transmitting shaft has a driving shaft 4 as a shaft member that is connected to a first shaft 2 as an axial member linked to a transmission (not shown) connected to an engine (not shown) as a driving source so as to be able to rotate integrally with the first shaft 2 through a first constant-velocity joint J1 as a joint portion, and a driven shaft 5 as a shaft member that is connected to a second shaft 3 as an axial member linked to a differential gear (not shown) connected to driving wheels (not shown) so as to be able to rotate integrally with the second shaft 3 through a second constant-velocity joint J2 as a joint portion. The both shafts 4 and 5 are connected so as to be able to rotate integrally with each other through a third constant-velocity joint J3. The propeller shaft 1 is rotatably supported through a center bearing that is provided around the third constant-velocity joint J3 and supported by a vehicle body (not shown) through a well-known bracket 6. The driving shaft 4 and the driven shaft 5 form the shaft members.

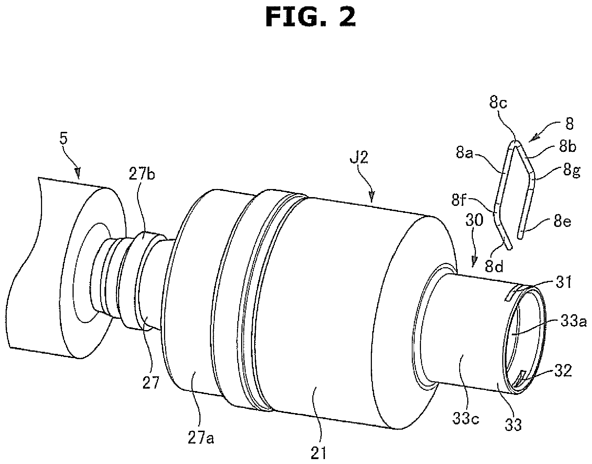

Fig. 2 is a perspective view showing the second constant-velocity joint and a circlip (a snap ring) according to an embodiment 1. Fig. 3 is a partial cross section of the second constant-velocity joint according to the embodiment 1. Fig. 4 is a sectional view taken along a plane A-A of Fig. 3, according to the embodiment 1.

### (Configuration of second constant-velocity joint)

A configuration of the second constant-velocity joint J2 as the joint portion will be explained.

An end portion on the vehicle front side of the second constant-velocity joint J2 is enclosed with a waterproofing boot 27 fixed through a fixing metal 27a and a boot band 27b. The end portion of the second constant-velocity joint J2 is connected to the driven shaft 5.

An end portion on the vehicle rear side of the second constant-velocity joint J2 is provided with a cylindrical-shaped tubular portion 30 formed integrally with an outer ring member 21 so as to extend in the axial direction.

This tubular portion 30 has a tubular portion body 33 having an insertion opening 33a. Further, a pair of first and second penetration holes (or slots) 31 and 32 are formed at positions close to a rear end edge on the vehicle rear side of the tubular portion body 33.

As shown in Fig. 3, a female spline 25 which an after-mentioned male spline 17a of the second shaft 3 is inserted into and engaged with in the axial direction from the vehicle rear side is formed at an inner periphery of the insertion opening 33a inside the tubular portion body 33.

The first penetration slot 31 functions as a snap ring inserting portion (or a retaining ring inserting portion) into which a snap ring 8 as a retaining ring is inserted, whereas the second penetration slot 32 functions as a snap ring fitting portion (or a retaining ring fitting portion) in which a first end portion 8d and a second end portion 8e of the snap ring 8 are fitted and supported. These first and second penetration slots 31 and 32 are located so as to face each other in a radial direction.

That is, as shown in Fig. 4, the first and second penetration slots 31 and 32 are arranged at positions at which the slots 31 and 32 are separate from each other in the circumferential direction and symmetric with respect to the axial direction so as to face each other by linearly cutting, along a vertical direction, an area extending in the circumferential direction of a part of the rear end edge of the tubular portion body 33.

Therefore, a first flat surface portion 34 and a second flat surface portion 35 as a pair of flat surface portions that extend in the vertical direction in Fig. 4 and that are parallel to a radial direction axis X are formed in the first penetration slot 31.

Likewise, a first flat surface portion 44 and a second flat surface portion 45 as a pair of flat surface portions that are parallel to the radial direction axis X are formed in the second penetration slot 32.

Further, the first and second penetration slots 31 and 32 are formed such that a shape and a position of each of the slots 31 and 32 are symmetric with respect to the radial direction axis X that is orthogonal to the rotation axis Z and passes through the rotation axis Z. Inaddition, the first and second penetration slots 31 and 32 are formed such that the snap ring 8 is inserted in and supported by the first and second penetration slots 31 and 32 with the snap ring 8 being symmetric with respect to the radial direction axis X.

Fig. 5 is a sectional view showing a state after assembling the second constant-velocity joint and the second shaft, according to the embodiment 1. Fig. 6 is a sectional view taken a long a plane B-B of Fig. 5, according to the embodiment 1.

The second constant-velocity joint J2 as the joint portion is formed by the outer ring member 21 having the tubular portion 30 extending to the vehicle rear side in the axial direction, an inner ring member 22 having an insertion opening 22a having on an inner peripheral surface thereof a female spline 22c, and balls 23 held by a holder 24 with the balls 23 being engaged with a plurality of ball engagement grooves 21a formed on an inner peripheral surface of the outer ring member 21 and a plurality of ball engagement grooves 22b formed on an outer peripheral surface of the inner ring member 22.

The second constant-velocity joint J2 as the joint portion and the tubular portion 30 form a joint member.

The driven shaft 5 forming the shaft member and having at a top end portion thereof a male spline 5a is inserted into the second constant-velocity joint J2 from the vehicle front side in the axial direction, and the male spline 5a is engaged with the female spline 22c formed on the inner peripheral surface of the inner ring member 22 of the second constant-velocity joint J2.

Here, a top end portion on the vehicle rear side of the male spline 5a of the driven shaft 5 is provided with a fitting groove 5b. A clip 18 is fitted into this fitting groove 5b, then the male spline 5a is prevented from being pulled out.

As described above, the waterproofing boot 27 is provided between the second constant-velocity joint J2 and the driven shaft 5.

An axial direction end portion on the vehicle front side of the waterproofing boot 27 is fixed to a boot fixing portion 36 of the driven shaft 5 with the boot band 27b.

An axial direction end portion on the vehicle rear side of the waterproofing boot 27 is fixed to the fixing metal 27a.

An axial direction end portion on the vehicle rear side of this fixing metal 27a is fixed to an outer peripheral surface of the outer ring member 21 of the second constant-velocity joint J2 through a seal ring 100a.

With this structure, liquid such as water is prevented from entering the second constant-velocity joint J2.

On the other hand, the second shaft 3 is inserted into the insertion opening 33a having the female spline 25 formed on an inner peripheral surface of the tubular portion body 33 of the tubular portion 30 from the vehicle rear side in the axial direction. Then, the male spline 17a formed at an inserting end portion 17 of an axial direction end portion on the vehicle front side of the second shaft 3 is engaged with the female spline 25 formed on the inner peripheral surface of the tubular portion body 33.

A seal groove 15 is formed at a small diameter portion 13 located on the vehicle rear side of the inserting end portion 17. A seal ring 100 as a sealing member that seals a gap between an inner peripheral surface of the insertion opening 33a of the tubular portion body 33 and the small diameter portion 13 is provided at the seal groove 15.

Further, in the axial direction on the vehicle rear side of the seal groove 15, a tapered portion 16, a fitting groove portion (or an engagement groove portion) 14 for the snap ring 8, a middle diameter portion 12 and a large diameter portion 11 having an end surface 11a are formed.

Position relationships of these portions etc. are set such that, in a state in which the end surface 11a of the large diameter portion 11 and a top end surface 33b of the tubular portion body 33 contact each other, the snap ring 8 fitted and supported in the first and second penetration slots 31 and 32 of the tubular portion body 33 is inserted, fitted and supported in the fitting groove portion 14 of the second shaft 3.

Here, the snap ring 8 is circular in cross section.

As shown in Fig. 6, upper parts of a first inserting portion 8a and a second inserting portion 8b of the snap ring 8 contact the first flat surface portion 34 and the second flat surface portion 35 of the first penetration slot 31 respectively, and a connecting portion 8c as a protruding portion where the first inserting portion 8a and the second inserting portion 8b connect each other protrudes from the first penetration slot 31 outwards with respect to an outer peripheral surface 33c of the tubular portion body 33 of the tubular portion 30.

Bending portions 8f and 8g located at a middle of the snap ring 8 and bent between the first inserting portion 8a and the first end portion 8d and between the second inserting portion 8b and the second end portion 8e respectively contact the inner peripheral surface of the insertion opening 33a of the tubular portion body 33.

Top ends of the first end portion 8d and the second end portion 8e of the snap ring 8 are fitted and supported in the second penetration slot 32.

Four engagement-stopper portions Y, illustrated by hatch patterns, located at the first inserting portion 8a, the second inserting portion 8b, the first end portion 8d and the second end portion 8e are inserted into the fitting groove portion 14 of the second shaft 3, and fitted and supported by after-mentioned bottom surface 14a, first side surface 14b and second side surface 14c that form the fitting groove portion 14 in the fitting groove portion 14 of the second shaft 3.

In this manner, pulling-out of the second constant-velocity joint J2 and the second shaft 3 in the axial direction is prevented by the snap ring 8. Then, by the female spline 25 of the tubular portion body 33 and the male spline 17a of the inserting end portion 17 which are engaged with each other, rotation in the circumferential direction is transmitted from the second constant-velocity joint J2 to the second shaft 3.

Here, an engagement state of the snap ring 8 can be visually checked from the outside through the first penetration slot 31 and the second penetration slot 32.

Fig. 7 is a sectional view showing a state before assembling the second constant-velocity joint and the second shaft, according to the embodiment 1. Fig. 8 is a sectional view taken along a plane C-C of Fig. 7, according to the embodiment 1. Fig. 9 is a sectional view showing a state during assembly of the second constant-velocity joint and the second shaft, according to the embodiment 1. Fig. 10 is a sectional view taken along a plane D-D of Fig. 9, according to the embodiment 1. Fig. 11 is a sectional view showing a state of completion of the assembly of the second constant-velocity joint and the second shaft, according to the embodiment 1. Fig. 12 is a sectional view taken along a plane E-E of Fig. 11, according to the embodiment 1.

### (Assembly of second constant-velocity joint and second shaft)

As shown in Figs. 7 and 8, before connecting the second shaft 3 to the second constant-velocity joint J2, the snap ring 8 is inserted in the tubular portion body 33 from the first penetration slot 31, and the first inserting portion 8a and the second inserting portion 8b of the snap ring 8 are fitted to and supported by the first flat surface portion 34 and the second flat surface portion 35 of the first penetration slot 31 respectively located at positions in the circumferential direction of the first penetration slot 31, also the top ends of the first end portion 8d and the second end portion 8e of the snap ring 8 are fitted to and supported by the first flat surface portion 44 and the second flat surface portion 45 of the second penetration slot 32 respectively located at positions in the circumferential direction of the second penetration slot 32.

As described above, the connecting portion 8c as the protruding portion protrudes from the first penetration slot 31 outwards with respect to the outer peripheral surface 33c of the tubular portion body 33.

Because of this, by hooking a tool or the like to this connecting portion 8c, the snap ring 8 can be easily removed or pulled out.

Regarding the second shaft 3, the seal ring 100 is fitted in the seal groove 15.

The fitting groove portion 14 in which the snap ring 8 is fitted and supported is formed by the bottom surface 14a, the first side surface 14b and the second side surface 14c that are formed linearly in a substantially orthogonal direction to the rotation axis Z.

By these first and second side surfaces 14b and 14c formed linearly in the substantially orthogonal direction to the rotation axis Z, separation or pulling-out of the second shaft 3 and the second constant-velocity joint J2 in the axial direction is prevented with the snap ring 8 being inserted and fitted and supported in the fitting groove portion 14.

The state during assembly of the second constant-velocity joint and the second shaft will be explained with reference to Figs. 9 and 10.

The inserting end portion 17 of the second shaft 3 is inserted into the insertion opening 33a of the tubular portion body 33, and the male spline 17a of the inserting end portion 17 is engaged with the female spline 25 formed on the inner peripheral surface of the insertion opening 33a.

At this time, the tapered portion 16 of the second shaft 3 contacts the snap ring 8, and pushes the first inserting portion 8a, the second inserting portion 8b, the first end portion 8d and the second end portion 8e then widens or opens the snap ring 8.

Here, since the snap ring 8 is circular in cross section, a sliding resistance between the tapered portion 16 of the second shaft 3 and the snap ring 8 is relatively small, then good workability of insertion of the second shaft 3 is secured.

The inserting end portion 17 of the second shaft 3 is inserted until the top end surface 33b of the tubular portion body 33 and the end surface 11aof the large diameter portion 11 of the second shaft 3 contact each other.

Next, the state of completion of the assembly of the second constant-velocity joint and the second shaft will be explained with reference to Figs. 11 and 13.

When making the top end surface 33b of the tubular portion body 33 and the end surface 11a of the large diameter portion 11 of the second shaft 3 contact each other, the snap ring 8 goes over the tapered portion 16 and a diameter of the snap ring 8 becomes small (the widened snap ring 8 is shrunk), then the snap ring 8 is accommodated in the fitting groove portion 14. The engagement-stopper portions Y, illustrated by the hatch patterns, of the snap ring 8 are engaged with and stopped by the first side surface 14b and the second side surface 14c of the fitting groove portion 14.

Here, the snap ring 8 may be rectangular in cross section, although this shape is not illustrated in the drawings. In this case, since surfaces of the rectangular shape of the snap ring 8 tightly contact the second penetration slot 32 and the fitting groove portion 14, a holding force of the second shaft 3 by the snap ring 8 becomes strong, and pulling-out of the snap ring 8 and also pulling-out of the second shaft 3 can be suppressed.

Further, the seal ring 100 accommodated in the seal groove 15 of the second shaft 3 contacts the inner peripheral surface of the insertion opening 33a of the tubular portion body 33, and liquid-tightly seals this inner peripheral surface.

Since an engagement state (an engagement-stop state) of the snap ring 8 and the fitting groove portion 14 of the second shaft 3 can be visually checked from the outside through the first penetration slot 31 and the second penetration slot 32, a proper pulling-out stopper can be secured.

Effects obtained by the embodiment 1 will be described below.
(1) The snap ring 8 as the retaining ring can be inserted inwards into the first penetration slot 31 formed at the tubular portion body 33 of the tubular portion 30 from a radial direction outer side.

Therefore, good workability of assembly of the snap ring 8 is secured. Further, the engagement-stop state of the second shaft 3 by the snap ring 8 can be visually checked from the outside through the first penetration slot 31, then check of the engagement state by the snap ring 8 can be made.

(2) When the second shaft 3 receives a force in a direction in which the second shaft 3 is pulled out from the tubular portion 30, the snap ring 8 contacts the first side surface 14b, formed linearly in the substantially orthogonal direction to the rotation axis Z, of the fitting groove portion 14.

Therefore, since the first side surface 14b contacts the snap ring 8 at a substantially right angle with respect to a direction in which the snap ring 8 is pulled out, as compared with a case where the first side surface 14b is a tilted surface, a high restraining force (a high stopper force) is generated, then pulling-out of the second shaft 3 can be surely prevented.

(3) When the second shaft 3 is inserted into the insertion opening 33a formed at the tubular portion body 33 of the tubular portion 30, the diameter (a size) of the snap ring 8 previously inserted into and engaged with the tubular portion 30 before insertion of the second shaft 3 becomes large by the tapered portion 16 of the second shaft 3 once, and becomes small when reaching the fitting groove portion 14, then the snap ring 8 is fitted in the fitting groove portion 14.

Therefore, since the snap ring 8 can be widened (the diameter of the snap ring 8 becomes large) by insertion of the second shaft 3, workability of assembly can be improved.

(4) The snap ring 8 having an arc shape with a cutting portion at its circumferential direction part is inserted into the first penetration slot 31 from the outside, and the second constant-velocity joint J2 and the second shaft 3 are connected.

Therefore, even in the connecting state of the second constant-velocity joint J2 and the second shaft 3, the snap ring 8 can be pulled out, and thus good workability of removal of the second shaft 3 is secured.

(5) The snap ring 8 is formed into a shape such that the connecting portion 8c protrudes outwards with respect to the outer peripheral surface 33c of the tubular portion body 33 of the tubular portion 30.

Therefore, when pulling out the snap ring 8, for instance, by hooking a tool or the like to the connecting portion 8c, the snap ring 8 can be easily pulled out.

(6) The snap ring 8 has the first inserting portion 8a and the second inserting portion 8b which are fitted in the fitting groove portion 14, and also has the first end portion 8d and the second end portion 8e as a pair of end portions including the cutting portion. The first end portion 8d and the second end portion 8e can be fitted in the fitting groove portion 14.

Therefore, since the first end portion 8d and the second end portion 8e of the snap ring 8 can also be fitted in the fitting groove portion 14, a high fitting strength (or a high engagement strength) between the snap ring 8 and the fitting groove portion 14 can be secured by the first and second inserting portions 8a and 8b and the first and second end portions 8d and 8e of the snap ring 8.

(7) The snap ring 8 has a symmetrical shape with respect to the radial direction axis X that is orthogonal to the rotation axis Z.

Therefore, the insertion of the snap ring 8 can be possible regardless of an orientation of the snap ring 8 to the tubular portion 30.

(8) The second penetration slot 32 functioning as the snap ring fitting portion is provided only at an opposite side to the first penetration slot 31 functioning as the snap ring inserting portion with respect to the rotation axis Z of the second constant-velocity joint J2, and the snap ring 8 can be fitted in or engaged with the first penetration slot 31 and the second penetration slot 32.

Therefore, work of forming the second penetration slot 32 is simplified. Further, since the snap ring 8 is engaged with and supported by the first and second penetration slots 31 and 32 located at the symmetrical positions in the radial direction, the snap ring 8 can be engaged with the first and second penetration slots 31 and 32 with good balance.

(9) The second penetration slot 32 that penetrates the tubular portion 30 (the tubular portion body 33) in the radial direction is formed as the snap ring fitting portion.

Therefore, the engagement-stop state of the second shaft 3 by the snap ring 8 can be visually checked from the outside through the second penetration slot 32 as well, then check of the engagement state by the snap ring 8 can be made.

(10) The snap ring 8 is circular in cross section.

Therefore, a sliding resistance occurring when widening the snap ring 8 by the tapered portion 16 of the second shaft 3 can be relatively small, then good workability of insertion of the second shaft 3 is secured.

Alternatively, the snap ring 8 is rectangular in cross section.

Thus, since the surfaces of the rectangular shape of the snap ring 8 tightly contact the first and second penetration slots 31 and 32 and the fitting groove portion 14, a holding force of the second shaft 3 by the snap ring 8 becomes strong, and pulling-out of the snap ring 8 and also pulling-out of the second shaft 3 can be suppressed.

(11) The seal ring 100 that seals a gap between the inner peripheral surface of the tubular portion body 33 of the tubular portion 30 and an outer peripheral surface of the second shaft 3 is provided at the top end surface 33b side of the tubular portion body 33 with respect to the both engaged splines 25 and 17a.

Therefore, water can be prevented from entering the both splines 25 and 17a, thereby suppressing an occurrence of rust. Decrease in driving torque can thus be suppressed.

Further, since the seal ring 100 is provided at the inner periphery of the tubular portion body 33, it is possible to suppress increase in size in the radial direction of the propeller shaft 1.

(12) The snap ring 8 contacts both of the first flat surface portion 34 and the second flat surface portion 35 of the first penetration slot 31 with the snap ring 8 being inserted in the tubular portion body 33. Therefore, since the snap ring 8 contacts the tubular portion body 33 at at least two points, rattle or backlash of the snap ring 8 can be suppressed.

### [Embodiment 2]

Fig. 13 is a drawing showing an inserting end portion and its vicinity of a first shaft according to an embodiment 2. Fig. 14 is a drawing showing a state after assembling a first constant-velocity joint and the first shaft before a snap ring is inserted, according to the embodiment 2.

Unlike the embodiment 1, the embodiment 2 shows connection of a first shaft 2 and a first constant-velocity joint J1. A tubular portion 30 is formed integrally with an inner ring member 22. Further, supporting grooves 26 that support both bending portions 8f and 8g of a snap ring 8 are formed on an inner peripheral surface of a tubular portion body 33 of the tubular portion 30 between a first penetration slot 31 and a second penetration slot 32 formed at the tubular portion body 33.

Insertion and engagement of the snap ring 8 is carried out after connecting the first shaft 2 and the first constant-velocity joint J1.

The other structures or configurations are the same as those of the embodiment 1. Elements and portions etc. that are common to the embodiment 1 are denoted by the same reference signs, and their explanations are omitted here.

Next, workings and effects of the embodiment 2 will be explained.
(1) Insertion and engagement of the snap ring 8 is carried out after connecting the first shaft 2 and the first constant-velocity joint J1.

Therefore, since the first penetration slot 31 and the second penetration slot 32 formed at the tubular portion body 33 and the fitting groove portion 14 formed at the first shaft 2 are aligned with each other, the snap ring 8 can be easily inserted, and surely engaged and supported.

(2) The supporting grooves 26 supporting the snap ring 8 are formed on the inner peripheral surface of the tubular portion body 33 of the tubular portion 30 between the first penetration slot 31 and the second penetration slot 32 formed at the tubular portion body 33.

Therefore, a high engagement strength of the snap ring 8 can be secured.

(3) The snap ring 8 can be inserted inwards into the first penetration slot 31 of the tubular portion 30 from the radial direction outer side.

Therefore, good workability of assembly of the snap ring 8 is secured. Further, an engagement-stop state of the first shaft 2 by the snap ring 8 can be visually checked from the outside through the first penetration slot 31, then check of an engagement state by the snap ring 8 can be made.

(4) When the first shaft 2 receives a force in a direction in which the first shaft 2 is pulled out from the tubular portion 30, the snap ring 8 contacts the first side surface 14b, formed linearly in the substantially orthogonal direction to the rotation axis Z, of the fitting groove portion 14.

Therefore, since the first side surface 14b contacts the snap ring 8 at a substantially right angle with respect to a direction in which the snap ring 8 is pulled out, as compared with a case where the first side surface 14b is a tilted surface, a high restraining force (a high stopper force) is generated, then pulling-out of the first shaft 2 can be surely prevented.

(5) The snap ring 8 having an arc shape with a cutting portion at its circumferential direction part is inserted into the first penetration slot 31 from the outside, and the first constant-velocity joint J1 and the first shaft 2 are connected.

Therefore, even in the connecting state of the first constant-velocity joint J1 and the first shaft 2, the snap ring 8 can be pulled out, and thus good workability of removal of the first shaft 2 is secured.

(6) The snap ring 8 is formed into a shape such that the connecting portion 8c protrudes outwards with respect to the outer peripheral surface 33c of the tubular portion body 33 of the tubular portion 30.

Therefore, when pulling out the snap ring 8, for instance, by hooking a tool or the like to the connecting portion 8c, the snap ring 8 can be easily pulled out.

(7) The snap ring 8 has the first inserting portion 8a and the second inserting portion 8b which are fitted in the fitting groove portion 14, and also has the first end portion 8d and the second end portion 8e as a pair of end portions including the cutting portion. The first end portion 8d and the second end portion 8e can be fitted in the fitting groove portion 14.

Therefore, since the first end portion 8d and the second end portion 8e of the snap ring 8 can also be fitted in the fitting groove portion 14, a high fitting strength (or a high engagement strength) between the snap ring 8 and the fitting groove portion 14 can be secured by the first and second inserting portions 8a and 8b and the first and second end portions 8d and 8e of the snap ring 8.

(8) The snap ring 8 has a symmetrical shape with respect to the radial direction axis X that is orthogonal to the rotation axis Z.

Therefore, the insertion of the snap ring 8 can be possible regardless of an orientation of the snap ring 8 to the tubular portion 30.

(9) The second penetration slot 32 functioning as the snap ring fitting portion is provided only at an opposite side to the first penetration slot 31 functioning as the snap ring inserting portion with respect to the rotation axis Z of the first constant-velocity joint J1, and the snap ring 8 can be fitted in or engaged with the first penetration slot 31 and the second penetration slot 32.

Therefore, work of forming the second penetration slot 32 is simplified. Further, since the snap ring 8 is engaged with and supported by the first and second penetration slots 31 and 32 located at the symmetrical positions in the radial direction, the snap ring 8 can be engaged with the first and second penetration slots 31 and 32 with good balance.

(10) The second penetration slot 32 that penetrates the tubular portion 30 (the tubular portion body 33) in the radial direction is formed as the snap ring fitting portion.

Therefore, the engagement-stop state of the first shaft 2 by the snap ring 8 can be visually checked from the outside through the second penetration slot 32 as well, then check of the engagement state by the snap ring 8 can be made.

(11) The snap ring 8 is circular in cross section.

Therefore, a sliding resistance occurring when widening the snap ring 8 by the tapered portion 16 of the first shaft 2 can be relatively small, then good workability of insertion of the first shaft 2 is secured.

Alternatively, the snap ring 8 is rectangular in cross section.

Thus, since the surfaces of the rectangular shape of the snap ring 8 tightly contact the first and second penetration slots 31 and 32 and the fitting groove portion 14, a holding force of the first shaft 2 by the snap ring 8 becomes strong, and pulling-out of the snap ring 8 and also pulling-out of the first shaft 2 can be suppressed.

(12) The seal ring 100 that seals a gap between the inner peripheral surface of the tubular portion body 33 of the tubular portion 30 and an outer peripheral surface of the first shaft 2 is provided at the top end surface 33b side of the tubular portion body 33 with respect to the both engaged splines 25 and 17a.

Therefore, water can be prevented from entering the both splines 25 and 17a, thereby suppressing an occurrence of rust. Decrease in driving torque can thus be suppressed.

Further, since the seal ring 100 is provided at the inner periphery of the tubular portion body 33, it is possible to suppress increase in size in the radial direction of the propeller shaft 1.

(13) The snap ring 8 contacts both of the first flat surface portion 34 and the second flat surface portion 35 of the first penetration slot 31 with the snap ring 8 being inserted in the tubular portion body 33.

Therefore, since the snap ring 8 contacts the tubular portion body 33 at at least two points, rattle or backlash of the snap ring 8 can be suppressed.

### [Embodiment 3]

Fig. 15 is a perspective view showing a second constant-velocity joint as a joint portion and a tubular portion according to an embodiment 3.

Unlike the embodiment 1, a pair of supporting holes (or slots) 126 that penetrate a tubular portion body 33 and support both bending portions 8f and 8g of a snap ring 8 are formed at the middles between a first penetration slot 31a and a second penetration slot 32 of the tubular portion body 33. Further, an axial direction length a of the first penetration slot 31a (a first flat surface portion 34a and a second flat surface portion 35a) is formed to be greater than an axial direction length b of each of the second penetration slot 32 and the pair of supporting slots 126.

The other structures or configurations are the same as those of the embodiment 1. Elements and portions etc. that are common to the embodiment 1 are denoted by the same reference signs, and their explanations are omitted here.

Next, workings and effects of the embodiment 3 will be explained.
(1) The axial direction length a of the first penetration slot 31a is formed to be greater than the axial direction length b of each of the second penetration slot 32 and the pair of supporting slots 126.

Therefore, since the length a in the axial direction of the first penetration slot 31a as the snap ring inserting portion is relatively great, workability of hooking of a tool or the like to the snap ring 8 when pulling out the snap ring 8 can be further improved.

(2) The pair of supporting slots 126 that penetrate the tubular portion body 33 and support the both bending portions 8f and 8g of the snap ring 8 are formed at the middles between the first penetration slot 31a and the second penetration slot 32.

Therefore, a high fitting strength (or a high engagement strength) of the snap ring 8 can be secured.

The other workings and effects are the same as those of the embodiment 1.

### [Embodiment 4]

Fig. 16 is a partial cross section of a second constant-velocity joint as a joint portion and a tubular portion according to an embodiment 4.

Unlike the embodiment 1, a first flat surface portion 34b and a second flat surface portion 35b of a first penetration slot 31b are not parallel to the radial direction axis X. That is, a cross section perpendicular to the rotation axis Z of the first penetration slot 31b is shaped such that a width in the circumferential direction of the rotation axis Z gradually increases from a radial direction inner side toward a radial direction outer side.

In addition, a second groove 32a as a snap ring fitting portion is not a penetration slot, but a groove having a bottom surface 50, a first flat surface portion 44a and a second flat surface portion 45a.

The first flat surface portion 44a and the second flat surface portion 45a are parallel to the radial direction axis X.

The other structures or configurations are the same as those of the embodiment 1. Elements and portions etc. that are common to the embodiment 1 are denoted by the same reference signs, and their explanations are omitted here.

Next, workings and effects of the embodiment 4 will be explained.
(1) The first penetration slot 31b as a snap ring inserting portion is formed such that an opening width of its outer peripheral side (a radial direction outer side) is widest.

Therefore, good workability of insertion of the snap ring 8 is secured.

(2) The second groove 32a as the snap ring fitting portion is not the penetration slot, but the groove.

Therefore, as compared with the penetration slot, decrease in strength of the tubular portion 30 can be suppressed.

The other workings and effects are the same as those of the embodiment 1, except for the working and effect (9) of the embodiment 1.

### [Other embodiments]

Further, the retaining ring is explained as the snap ring (the circlip) in the embodiments. However, the retaining ring is not limited to this snap ring (the circlip), but the retaining ring could be a C-ring.

In the embodiments, completion of the insertion of the first shaft or the second shaft into the constant-velocity j oint is checked by the contact between the top end surface of the tubular portion and the end surface of the first shaft or the second shaft. However, the check of the completion of the insertion is not limited to this manner. A coloring part may be formed continuously in the circumferential direction at an opening edge portion of the end surface of the first shaft or the second shaft. Then, by the fact that this coloring part is covered with and hidden by the top end surface of the tubular portion, the completion of the insertion can be checked.

## Claims

1. A power transmitting shaft (1) located between a first shaft (2) and a second shaft (3) as a pair of axial members provided between a driving source and driving wheels of a vehicle, the axial members (2, 3) each having an inserting end portion (17) and a fitting groove portion (14), the power transmitting shaft comprising:
a shaft member (4, 5) provided between the first shaft (2) and the second shaft (3);
a joint member provided between the shaft member (4, 5) and the axial member (2, 3) in a direction of a rotation axis (Z) of the axial member (2, 3) and having a joint portion (J1, J2) and a tubular portion (30), wherein
the joint portion (J1, J2) is a flexible joint provided at the shaft member (4, 5), and
the tubular portion (30) has a tubular portion body (33), a retaining ring inserting portion (31, 31a, 31b) and a retaining ring fitting portion (32, 32a), wherein
the tubular portion body (33) is provided at the joint portion (J1, J2) and has a tubular shape into which the inserting end portion (17) of the axial member (2, 3) can be inserted,
the retaining ring inserting portion (31, 31a, 31b) is provided at the tubular portion body (33) and penetrates the tubular portion body (33) in a radial direction crossing the rotation axis (Z) of the axial member (2, 3), and
the retaining ring fitting portion (32, 32a) is provided at the tubular portion body (33), opens toward an inner side of the tubular portion body (33) in the radial direction crossing the rotation axis (Z) of the axial member (2, 3) and has a shape that extends in a circumferential direction of the rotation axis (Z) of the axial member (2, 3); and
a retaining ring (8) made of elastic material,
**characterized in that**
the retaining ring (8) can be inserted into the tubular portion body (33) from the retaining ring inserting portion (31, 31a, 31b) to fit the retaining ring (8) to an inside of the tubular portion (30), and
the retaining ring (8) fit to the inside of the tubular portion (30) stops a movement of the joint member relative to the axial member (2, 3) in the direction of the rotation axis (Z) of the axial member (2, 3) by fitting of the retaining ring (8) into both of the fitting groove portion (14) of the axial member (2, 3) and the retaining ring fitting portion (32, 32a) with the inserting end portion (17) being inserted into the tubular portion (30).

2. The power transmitting shaft (1) as claimed in claim 1, wherein:
the fitting groove portion (14) has, in a cross section passing through the rotation axis (Z) of the axial member (2, 3), a bottom surface (14a) and a pair of first and second side surfaces (14b, 14c) formed at both sides in the direction of the rotation axis (Z) of the axial member (2, 3) of the bottom surface (14a),
the first side surface (14b) is located at a position close to the inserting end portion (17) with respect to the bottom surface (14a), and has a flat shape parallel to a surface that is substantially perpendicular to the rotation axis (Z) of the axial member (2, 3), and
the second side surface (14c) is located at an opposite side to the first side surface (14b) with respect to the bottom surface (14a).

3. The power transmitting shaft (1) as claimed in claim 1, wherein:
the axial member (2, 3) has a tapered portion (16) which is provided between the inserting end portion (17) and the fitting groove portion (14) in the direction of the rotation axis (Z) of the axial member (2, 3) and whose outside diameter in the radial direction crossing the rotation axis (Z) of the axial member (2, 3) gradually increases from an inserting end portion (17) side toward a fitting groove portion (14) side.

4. The power transmitting shaft (1) as claimed in claim 1, wherein:
the retaining ring (8) is a snap ring.

5. The power transmitting shaft (1) as claimed in claim 4, wherein:
the retaining ring (8) has a protruding portion (8c), and
the protruding portion (8c) is shaped so as to protrude outwards from an outer peripheral surface (33c) of the tubular portion (30) in the radial direction crossing the rotation axis (Z) of the axial member (2, 3) through the retaining ring inserting portion (31, 31a, 31b).

6. The power transmitting shaft (1) as claimed in claim 4, wherein:
the retaining ring (8) has a first end portion (8d) and a second end portion (8e) as a pair of end portions that face each other through a cutting portion, and
the first and second end portions (8d, 8e) can be fitted into the fitting groove portion (14).

7. The power transmitting shaft (1) as claimed in claim 1, wherein:
the retaining ring (8) has a symmetrical shape with respect to a radial direction axis (X) that is orthogonal to the rotation axis (Z) of the axial member (2, 3).

8. The power transmitting shaft (1) as claimed in claim 1, wherein:
the retaining ring fitting portion (32, 32a) is provided only at an opposite side to the retaining ring inserting portion (31, 31a, 31b) with respect to the rotation axis (Z) of the axial member (2, 3), and
the retaining ring (8) can be fitted into the retaining ring inserting portion (31, 31a, 31b) and the retaining ring fitting portion (32, 32a).

9. The power transmitting shaft (1) as claimed in claim 8, wherein:
the retaining ring fitting portion (32) is a penetration hole that penetrates the tubular portion body (33) in the radial direction crossing the rotation axis (Z) of the axial member (2, 3).

10. The power transmitting shaft (1) as claimed in claim 8, wherein:
a length (a) in the direction of the rotation axis (Z) of the axial member (2, 3) of the retaining ring inserting portion (31a) is greater than a length (b) in the direction of the rotation axis (Z) of the axial member (2, 3) of the retaining ring fitting portion (32).

11. The power transmitting shaft (1) as claimed in claim 1, wherein:
the retaining ring fitting portion (32a) has a groove shape having a bottom surface (50).

12. The power transmitting shaft (1) as claimed in claim 1, wherein:
the retaining ring (8) is circular in cross section passing through the rotation axis (Z) of the axial member (2, 3).

13. The power transmitting shaft (1) as claimed in claim 1, wherein:
the retaining ring (8) is rectangular in cross section passing through the rotation axis (Z) of the axial member (2, 3).

14. The power transmitting shaft (1) as claimed in claim 1, further comprising:
a sealing member (100) capable of preventing water from entering the inserting end portion (17) from an end portion of the tubular portion (30) and the retaining ring inserting portion (31, 31a, 31b).

15. The power transmitting shaft (1) as claimed in claim 14, wherein:
the sealing member (100) is provided between the tubular portion (30) and the axial member (2, 3) in the radial direction crossing the rotation axis (Z) of the axial member (2, 3), and located between the inserting end portion (17) and the retaining ring inserting portion (31, 31a, 31b) in the direction of the rotation axis (Z) of the axial member (2, 3).

16. The power transmitting shaft (1) as claimed in claim 1, wherein:
a cross section, perpendicular to the rotation axis (Z) of the axial member (2, 3), of the retaining ring inserting portion (31b) is shaped such that a width in the circumferential direction of the rotation axis (Z) of the axial member (2, 3) gradually increases from an inner side toward an outer side in the radial direction crossing the rotation axis (Z) of the axial member (2, 3).

17. The power transmitting shaft (1) as claimed in claim 1, wherein:
the retaining ring (8) can contact both sides in the circumferential direction of the rotation axis (Z) of the axial member (2, 3) of the retaining ring inserting portion (31, 31a, 31b) with the axial member (2, 3) being inserted into the tubular portion (30).

## Patentansprüche

1. Eine Kraftübertragungswelle (1), die zwischen einer ersten Welle (2) und einer zweiten Welle (3) als ein Paar von axialen Elementen angeordnet ist, die zwischen einer Antriebsquelle und Antriebsrädern eines Fahrzeugs angeordnet sind, wobei die axialen Elemente (2, 3) jeweils einen Einsetzendabschnitt (17) und einen Passnutabschnitt (14) aufweisen, wobei die Kraftübertragungswelle Folgendes umfasst:
ein Wellenelement (4, 5), das zwischen der ersten Welle (2) und der zweiten Welle (3) angeordnet ist;
ein Verbindungselement, das zwischen dem Wellenelement (4, 5) und dem axialen Element (2, 3) in einer Richtung einer Drehachse (Z) des axialen Elements (2, 3) angeordnet ist und einen Verbindungsabschnitt (J1, J2) und einen rohrförmigen Abschnitt (30) aufweist, wobei
der Verbindungsabschnitt (J1, J2) ein flexibles Gelenk ist, das an dem Wellenelement (4, 5) angeordnet ist, und
der rohrförmige Abschnitt (30) einen rohrförmigen Abschnittskörper (33), einen Halteringeinsetzabschnitt (31, 31a, 31b) und einen Halteringpassabschnitt (32, 32a) aufweist, wobei
der rohrförmige Abschnittskörper (33) an dem Verbindungsabschnitt (J1, J2) angeordnet ist und eine rohrförmige Form aufweist, in die der Einsetzendabschnitt (17) des axialen Elements (2, 3) eingesetzt werden kann,
der Halteringeinsetzabschnitt (31, 31a, 31b) an dem rohrförmigen Abschnittskörper (33) angeordnet ist und den rohrförmigen Abschnittskörper (33) in einer die Drehachse (Z) des axialen Elements (2, 3) kreuzenden Radialrichtung durchdringt, und
der Halteringpassabschnitt (32, 32a) an dem rohrförmigen Abschnittskörper (33) angeordnet ist, sich zu einer Innenseite des rohrförmigen Abschnittskörpers (33) in der die Drehachse (Z) des axialen Elements (2, 3) kreuzenden Radialrichtung öffnet und eine Form aufweist, die sich in einer Umfangsrichtung der Drehachse (Z) des axialen Elements (2, 3) erstreckt; und
einen Haltering (8) aus einem elastischen Material,
**dadurch gekennzeichnet dass**
der Haltering (8) in den rohrförmigen Abschnittskörper (33) von dem Halteringeinsetzabschnitt (31, 31a, 31b) aus eingesetzt werden kann, um den Haltering (8) an eine Innenseite des rohrförmigen Abschnitts (30) anzupassen, und
der an die Innenseite des rohrförmigen Abschnitts (30) angepasste Haltering (8) eine Bewegung des Verbindungselements relativ zu dem axialen Element (2, 3) in der Richtung der Drehachse (Z) des axialen Elements (2, 3) stoppt, indem der Haltering (8) sowohl in den Passnutabschnitt (14) des axialen Elements (2, 3) als auch in den Halteringpassabschnitt (32, 32a) eingepasst wird, wobei der Einsetzendabschnitt (17) in den rohrförmigen Abschnitt (30) eingesetzt wird.

2. Die Kraftübertragungswelle (1) gemäß Anspruch 1, wobei:
der Passnutabschnitt (14) in einem Querschnitt, der durch die Drehachse (Z) des axialen Elements (2, 3) verläuft, eine Bodenfläche (14a) und ein Paar erster und zweiter Seitenflächen (14b, 14c) aufweist, die an beiden Seiten in Richtung der Drehachse (Z) des axialen Elements (2, 3) der Bodenfläche (14a) ausgebildet sind,
die erste Seitenfläche (14b) sich in Bezug auf die Bodenfläche (14a) an einer Position nahe dem Einsetzendabschnitt (17) befindet und eine flache Form parallel zu einer Fläche aufweist, die im Wesentlichen senkrecht zur Drehachse (Z) des axialen Elements (2, 3) ist, und
die zweite Seitenfläche (14c) sich an einer der ersten Seitenfläche (14b) gegenüberliegenden Seite in Bezug auf die Bodenfläche (14a) befindet.

3. Die Kraftübertragungswelle (1) gemäß Anspruch 1, wobei:
das axiale Element (2, 3) einen verjüngten Abschnitt (16) aufweist, der zwischen dem Einsetzendabschnitt (17) und dem Passnutabschnitt (14) in Richtung der Drehachse (Z) des axialen Elements (2, 3) angeordnet ist und dessen Außendurchmesser in der die Drehachse (Z) des axialen Elements (2, 3) kreuzenden radialen Richtung von einer Seite des Einsetzendabschnitts (17) zu einer Seite des Passnutabschnitts (14) hin allmählich zunimmt.

4. Die Kraftübertragungswelle (1) gemäß Anspruch 1, wobei:
der Haltering (8) ein Sprengring ist.

5. Die Kraftübertragungswelle (1) gemäß Anspruch 4, wobei:
der Haltering (8) einen vorspringenden Abschnitt (8c) aufweist, und
der vorstehende Abschnitt (8c) so geformt ist, dass er von einer äußeren Umfangsfläche (33c) des rohrförmigen Abschnitts (30) in der radialen Richtung, die die Drehachse (Z) des axialen Elements (2, 3) kreuzt, durch den Halteringeinsetzabschnitt (31, 31a, 31b) nach außen vorsteht.

6. Die Kraftübertragungswelle (1) gemäß Anspruch 4, wobei:
der Haltering (8) einen ersten Endabschnitt (8d) und einen zweiten Endabschnitt (8e) als ein Paar von Endabschnitten aufweist, die einander durch einen Schneidabschnitt gegenüberliegen, und
die ersten und zweiten Endabschnitte (8d, 8e) in den Passnutabschnitt (14) eingepasst werden können.

7. Die Kraftübertragungswelle (1) gemäß Anspruch 1, wobei:
der Haltering (8) eine symmetrische Form in Bezug auf eine radiale Richtungsachse (X) hat, die orthogonal zur Drehachse (Z) des axialen Elements (2, 3) ist.

8. Die Kraftübertragungswelle (1) gemäß Anspruch 1, wobei:
der Halteringpassabschnitt (32, 32a) nur auf einer dem Halteringeinsetzabschnitt (31, 31a, 31b) in Bezug auf die Drehachse (Z) des axialen Elements (2, 3) gegenüberliegenden Seite angeordnet ist, und
der Haltering (8) in den Halteringeinsetzabschnitt (31, 31a, 31b) und den Halteringpassabschnitt (32, 32a) eingesetzt werden kann.

9. Die Kraftübertragungswelle (1) gemäß Anspruch 8, wobei:
der Halteringpassabschnitt (32) ein Durchgangsloch ist, das den rohrförmigen Abschnittskörper (33) in radialer Richtung durch die Drehachse (Z) des axialen Elements (2, 3) durchdringt.

10. Die Kraftübertragungswelle (1) gemäß Anspruch 8, wobei:
eine Länge (a) in Richtung der Drehachse (Z) des axialen Elements (2, 3) des Halteringeinsetzabschnitts (31a) größer ist als eine Länge (b) in Richtung der Drehachse (Z) des axialen Elements (2, 3) des Halteringpassabschnitts (32).

11. Die Kraftübertragungswelle (1) gemäß Anspruch 1, wobei:
der Halteringpassabschnitt (32a) eine Rillenform mit einer Bodenfläche (50) hat.

12. Die Kraftübertragungswelle (1) gemäß Anspruch 1, wobei:
der Haltering (8) einen kreisförmigen Querschnitt hat, der durch die Drehachse (Z) des axialen Elements (2, 3) verläuft.

13. Die Kraftübertragungswelle (1) gemäß Anspruch 1, wobei:
der Haltering (8) einen rechteckigen Querschnitt hat, der durch die Drehachse (Z) des axialen Elements (2, 3) verläuft.

14. Die Kraftübertragungswelle (1) gemäß Anspruch 1, des Weiteren umfassend:
ein Dichtungselement (100), das in der Lage ist, das Eindringen von Wasser in den Einsetzendabschnitt (17) von einem Endabschnitt des rohrförmigen Abschnitts (30) und dem Halteringeinsetzabschnitt (31, 31a, 31b) zu verhindern.

15. Die Kraftübertragungswelle (1) gemäß Anspruch 14, wobei:
das Dichtungselement (100) zwischen dem rohrförmigen Abschnitt (30) und dem axialen Element (2, 3) in der radialen Richtung, die die Drehachse (Z) des axialen Elements (2, 3) kreuzt, angeordnet ist und zwischen dem Einsetzendabschnitt (17) und dem Halteringeinsetzabschnitt (31, 31a, 31b) in der Richtung der Drehachse (Z) des axialen Elements (2, 3) angeordnet ist.

16. Die Kraftübertragungswelle (1) gemäß Anspruch 1, wobei:
ein Querschnitt senkrecht zur Drehachse (Z) des axialen Elements (2, 3) des Halteringeinsetzabschnitts (31b) so geformt ist, dass eine Breite in der Umfangsrichtung der Drehachse (Z) des axialen Elements (2, 3) allmählich von einer Innenseite zu einer Außenseite in der die Drehachse (Z) des axialen Elements (2, 3) kreuzenden Radialrichtung zunimmt.

17. Die Kraftübertragungswelle (1) gemäß Anspruch 1, wobei:
der Haltering (8) in Umfangsrichtung der Drehachse (Z) des axialen Elements (2, 3) beide Seiten des Halteringeinsetzabschnitts (31, 31a, 31b), wenn das axialen Element (2, 3) in den rohrförmigen Abschnitt (30) eingesetzt ist.

## Revendications

1. Arbre de transmission de puissance (1) placé entre un premier arbre (2) et un deuxième arbre (3) en tant que paire d'éléments axiaux disposés entre une source d'entraînement et des roues motrices d'un véhicule, les éléments axiaux (2, 3) présentant chacun une partie d'extrémité d'insertion (17) et une partie de gorge de fixation (14), l'arbre de transmission de puissance comprenant :
un élément d'arbre (4, 5) disposé entre le premier arbre (2) et le deuxième arbre (3) ;
un élément de joint disposé entre l'élément d'arbre (4, 5) et l'élément axial (2, 3) dans une direction d'un axe de rotation (Z) de l'élément axial (2, 3) et présentant une partie de joint (J1, J2) et une partie tubulaire (30), dans lequel
la partie de joint (J1, J2) est un joint flexible disposé sur l'élément d'arbre (4, 5), et
la partie tubulaire (30) présente un corps de partie tubulaire (33), une partie d'insertion de bague de retenue (31, 31a, 31b) et une partie de fixation de bague de retenue (32, 32a), dans lequel
le corps de partie tubulaire (33) est disposé sur la partie de joint (J1, J2) et présente une forme tubulaire dans laquelle la partie d'extrémité d'insertion (17) de l'élément axial (2, 3) peut être insérée,
la partie d'insertion de bague de retenue (31, 31a, 31b) est disposée sur le corps de partie tubulaire (33) et pénètre le corps de partie tubulaire (33) dans une direction radiale coupant l'axe de rotation (Z) de l'élément axial (2, 3), et
la partie de fixation de bague de retenue (32, 32a) est disposée sur le corps de partie tubulaire (33), s'ouvre vers un côté intérieur du corps de partie tubulaire (33) dans la direction radiale coupant l'axe de rotation (Z) de l'élément axial (2, 3) et présente une forme qui s'étend dans une direction circonférentielle de l'axe de rotation (Z) de l'élément axial (2, 3) ; et
une bague de retenue (8) faite d'un matériau élastique,
**caractérisé en ce que**
la bague de retenue (8) peut être insérée dans le corps de partie tubulaire (33) depuis la partie d'insertion de bague de retenue (31, 31a, 31b) pour fixer la bague de retenue (8) dans un intérieur de la partie tubulaire (30), et
la bague de retenue (8) fixées dans l'intérieur de la partie tubulaire (30) arrête un mouvement de l'élément de joint par rapport à l'élément axial (2, 3) dans la direction de l'axe de rotation (Z) de l'élément axial (2, 3) par une fixation de la bague de retenue (8) dans les deux de la partie de gorge de fixation (14) de l'élément axial (2, 3) et la partie de fixation de bague de retenue (32, 32a) avec la partie d'extrémité d'insertion (17) insérée dans la partie tubulaire (30).

2. L'arbre de transmission de puissance (1) tel que revendiqué à la revendication 1, dans lequel :
la partie de gorge de fixation (14) présente, dans une section transversale passant à travers l'axe de rotation (Z) de l'élément axial (2, 3), une surface de fond (14a) et une paire de première et deuxième surfaces latérales (14b, 14c) constituée sur les deux côtés dans la direction de l'axe de rotation (Z) de l'élément axial (2, 3) de la surface de fond (14a),
la première surface latérale (14b) est située à un emplacement proche de la partie d'extrémité d'insertion (17) par rapport à la surface de fond (14a), et présente une forme plate parallèle à une surface qui est substantiellement perpendiculaire à l'axe de rotation (Z) de l'élément axial (2, 3), et
la deuxième surface latérale (14c) est située sur un côté opposé à la première surface latérale (14b) par rapport à la surface de fond (14a).

3. L'arbre de transmission de puissance (1) tel que revendiqué à la revendication 1, dans lequel :
l'élément axial (2, 3) présente une partie conique (16) qui est disposée entre la partie d'extrémité d'insertion (17) et la partie de gorge de fixation (14) dans la direction de l'axe de rotation (Z) de l'élément axial (2, 3) et dont un diamètre extérieur dans la direction radiale coupant l'axe de rotation (Z) de l'élément axial (2, 3) augmente progressivement depuis un côté de partie d'extrémité d'insertion (17) vers un côté de partie de gorge de fixation (14).

4. L'arbre de transmission de puissance (1) tel que revendiqué à la revendication 1, dans lequel :
la bague de retenue (8) est un anneau élastique.

5. L'arbre de transmission de puissance (1) tel que revendiqué à la revendication 4, dans lequel :
la bague de retenue (8) présente une partie débordante (8c), et
la partie débordante (8c) est formée de sorte à déborder vers l'extérieur depuis une surface périphérique extérieure (33c) de la partie tubulaire (30) dans la direction radiale coupant l'axe de rotation (Z) de l'élément axial (2, 3) à travers la partie d'insertion de bague de retenue (31, 31a, 31b).

6. L'arbre de transmission de puissance (1) tel que revendiqué à la revendication 4, dans lequel :
la bague de retenue (8) première partie d'extrémité (8d) et une deuxième partie d'extrémité (8e) en tant que paire de parties d'extrémité orientées l'une vers l'autre à travers une partie de coupe, et
les première et deuxième parties d'extrémité (8d, 8e) peuvent être fixées dans la partie de gorge de fixation (14) .

7. L'arbre de transmission de puissance (1) tel que revendiqué à la revendication 1, dans lequel :
la bague de retenue (8) présente une forme symétrique par rapport à un axe de direction radiale (X) qui est orthogonal à l'axe de rotation (Z) de l'élément axial (2, 3).

8. L'arbre de transmission de puissance (1) tel que revendiqué à la revendication 1, dans lequel :
la partie de fixation de bague de retenue (32, 32a) est disposée uniquement sur un côté opposé à la partie d'insertion de bague de retenue (31, 31a, 31b) par rapport à l'axe de rotation (Z) de l'élément axial (2, 3), et
la bague de retenue (8) peut être fixée dans la partie d'insertion de bague de retenue (31, 31a, 31b) et la partie de fixation de bague de retenue (32, 32a).

9. L'arbre de transmission de puissance (1) tel que revendiqué à la revendication 8, dans lequel :
la partie de fixation de bague de retenue (32) est un trou de pénétration qui pénètre le corps de partie tubulaire (33) dans la direction radiale coupant l'axe de rotation (Z) de l'élément axial (2, 3).

10. L'arbre de transmission de puissance (1) tel que revendiqué à la revendication 8, dans lequel :
une longueur (a) dans la direction de l'axe de rotation (Z) de l'élément axial (2, 3) de la partie d'insertion de bague de retenue (31a) est supérieure à une longueur (b) dans la direction de l'axe de rotation (Z) de l'élément axial (2, 3) de la partie de fixation de bague de retenue (32).

11. L'arbre de transmission de puissance (1) tel que revendiqué à la revendication 1, dans lequel :
la partie de fixation de bague de retenue (32a) présente une forme de gorge présentant une surface de fond (50).

12. L'arbre de transmission de puissance (1) tel que revendiqué à la revendication 1, dans lequel :
la bague de retenue (8) est circulaire en section transversale traversant l'axe de rotation (Z) de l'élément axial (2, 3).

13. L'arbre de transmission de puissance (1) tel que revendiqué à la revendication 1, dans lequel :
la bague de retenue (8) est rectangulaire en section transversale traversant l'axe de rotation (Z) de l'élément axial (2, 3).

14. L'arbre de transmission de puissance (1) tel que revendiqué à la revendication 1, comprenant en outre :
un élément d'étanchéité (100) capable d'empêcher l'eau d'entrer dans la partie d'extrémité d'insertion (17) depuis une partie d'extrémité de la partie tubulaire (30) et la partie d'insertion de bague de rétention (31, 31a, 31b).

15. L'arbre de transmission de puissance (1) tel que revendiqué à la revendication 14, dans lequel :
l'élément d'étanchéité (100) est disposé entre la partie tubulaire (30) et l'élément axial (2, 3) dans la direction radiale coupant l'axe de rotation (Z) de l'élément axial (2, 3), et placé entre la partie d'extrémité d'insertion (17) et la partie d'insertion de bague de retenue (31, 31a, 31b) dans la direction de l'axe de rotation (Z) de l'élément axial (2, 3).

16. L'arbre de transmission de puissance (1) tel que revendiqué à la revendication 1, dans lequel :
une section transversale, perpendiculaire à l'axe de rotation (Z) de l'élément axial (2, 3), de la partie d'insertion de bague de retenue (31b) présente une forme telle qu'une largeur dans la direction circonférentielle de l'axe de rotation (Z) de l'élément axial (2, 3) augmente progressivement depuis un côté intérieur vers un côté extérieur dans la direction radiale coupant l'axe de rotation (Z) de l'élément axial (2, 3).

17. L'arbre de transmission de puissance (1) tel que revendiqué à la revendication 1, dans lequel :
la bague de retenue (8) peut entrer en contact avec les deux côtés dans la direction circonférentielle de l'axe de rotation (Z) de l'élément axial (2, 3) de la partie d'insertion de bague de retenue (31, 31a, 31b) avec l'élément axial (2, 3) inséré dans la partie tubulaire (30) .
